# EUROPÄISCHE PATENTSCHRIFT

(11) **EP 0 692 397 B1**
(45) Veröffentlichungstag und Bekanntmachung des Hinweises auf die Patenterteilung: **29.04.1998**
(21) Anmeldenummer: 95110437.1
(22) Anmeldetag: 05.07.1995
(51) Int. Cl.: B60H 1/00

(54) **Luftklappe für eine Heizungs- oder eine Klimaanlage**
Air damper for a heating or air conditioning device
Clapet d'air pour dispositif de chauffage ou de climatisation

(30) Priorität: 15.07.1994 DE 4425029
(43) Veröffentlichungstag der Anmeldung: 17.01.1996
(73) Patentinhaber: Behr GmbH & Co., D-70469 Stuttgart (DE)
(72) Erfinder: Ross, Reinhold, D-71701 Schwieberdingen (DE)
(74) Vertreter: Wilhelm & Dauster Patentanwälte European Patent Attorneys

(56) Entgegenhaltungen:
- DE-A- 3 307 958
- DE-A- 3 832 988
- FR-A- 2 406 883
- FR-A- 2 550 848
- FR-A- 2 669 277
- FR-A- 2 707 928

## Beschreibung

Die Erfindung betrifft eine Luftklappe für eine Heizungs- oder eine Klimaanlage eines Kraftfahrzeugs, die mittels einer mechanischen Betätigungseinrichtung zwischen zwei die Endpositionen der Luftklappe definierenden Gehäuseanschlägen verschwenkbar ist, wobei der Luftklappe zur Verringerung der Anschlaggeschwindigkeit eine wenigstens im Bereich der beiden Gehäuseanschläge wirksame Dämpfungseinrichtung zugeordnet ist.

Eine solche Luftklappe ist in der FR 2 669 277 A1 beschrieben. Dabei ist dem Rand der Luftklappe ein elastischer Fortsatz zugeordnet, der mit elastisch nachgiebigen Aufprallelementen versehen ist, die den Anschlag der Luftklappe in ihren gegenüberliegenden Endpositionen am jeweiligen Gehäuseabschnitt der Heizungs- oder Klimaanlage dämpfen.

Eine andere Luftklappe ist aus der DE 33 07 958 A1 bekannt. Die Luftklappe ist in einem Gehäuse einer Fahrzeugklimaanlage integriert. Die Luftklappe dient zum alternativen Absperren von zwei Zweigleitungen, von denen eine mit einem Wärmetauscher versehen ist. Die beiden Zweigleitungen zweigen von einer Hauptleitung ab. In dem Übergangsbereich ist die Luftklappe zwischen zwei durch jeweils einen Anschlag begrenzten Endpositionen schwenkbeweglich gelagert. Die Luftklappe ist zwischen den beiden Endpositionen mittels einer mechanischen Betätigungsvorrichtung beweglich. Um zu gewährleisten, daß die Luftklappe in einer vom Benutzer gewünschten Position gehalten wird, auch wenn auf die Luftklappe starke Strömungsdrücke in den Leitungen wirken, ist eine Wandung in dem Bereich der Luftklappe, in dem die größten Störkräfte aufgrund von Luftströmungen auftreten, mit einer Rippe versehen, mit der der Rand der Luftklappe in diesem Bereich zusammenwirkt. Durch die Reibungskraft zwischen dem Rand der Luftklappe und der Rippe wird die Klappe in ihrer eingestellten Position auch gegen die Wirkung der durch die Luftströmungen auftretenden Störkräfte gehalten. Der in Form der Rippe verdickte Bereich der Wandung befindet sich in Abstand zu dem die Endposition der Luftklappe definierenden Anschlag.

Aufgabe der Erfindung ist es, eine Luftklappe der eingangs genannten Art zu schaffen, deren durch ihre Schwenkbewegungen verursachte Geräuschbildung verringert ist.

Diese Aufgabe wird dadurch gelöst, daß die Luftklappe mit einer über ihren gesamten Bewegungsbereich geschwindigkeitsabhängig wirksamen Dämpfungseinrichtung versehen ist. Dadurch wird die Luftklappe über ihren gesamten Schwenkweg gedämpft und kann auch in ihren beiden Endpositionen abgebremst und jeweils weich aufgefangen werden. Ein Klappern oder Vibrieren der Luftklappe in ihren Endpositionen oder in Zwischenpositionen während des Fahrbetriebes des Kraftfahrzeugs wird zuverlässig vermieden.

In Ausgestaltung der Erfindung ist an der Luftklappe drehfest ein Fortsatz vorgesehen, der mit einem entsprechend der Bewegungsbahn des Fortsatzes gekrümmten und mit einem Dämpfungsmedium gefüllten Schlauchelement zusammenwirkt, das stationär an einem Gehäuseteil der Heizungs- oder Klimaanlage angeordnet ist. Die geschwindigkeitsabhängige Dämpfung wird bei dieser Ausgestaltung durch die geeignete Wahl des Dämpfungsmediums erreicht, wobei bei hohen Schwenkgeschwindkeiten der Luftklappe eine erhöhte und bei geringen Schwenkgeschwindigkeiten eine entsprechend geringere Dämpfung bewirkt wird.

Weitere Vorteile und Merkmale der Erfindung ergeben sich aus den Unteransprüchen. Nachfolgend sind Ausführungsbeispiele der Erfindung beschrieben und anhand der Zeichnungen dargestellt.
- Fig. 1: zeigt schematisch eine zwischen zwei Anschlägen eines Gehäuses einer Heizungs- oder Klimaanlage eines Kraftfahrzeugs angeordnete Ausführungsform einer erfindungsgemäßen Luftklappe, deren Anschlaggeräusch durch zwei Dämpfungselemente gedämpft wird,
- Fig. 2: schematisch eine weitere Luftklappe ähnlich Figur 1, bei der die Dämpfungseinrichtung kombinierte Abbremselemente aufweist,
- Fig. 3: eine weitere Ausführungsform einer erfindungsgemäßen Luftklappe in schematischer Darstellung, die mit einer über ihren gesamten Bewegungsbereich wirkenden Dämpfungseinrichtung versehen ist,
- Fig. 4: einen Schnitt durch die gedämpfte Luftklappe nach Fig. 3 entlang der Schnittlinie IV-IV in Figur 3 und
- Fig. 5: schematisch eine weitere Ausführungsform einer erfindungsgemäßen Luftklappe, der besonders einfache Dämpfungselemente in Form von Blattfedern zugeordnet sind.

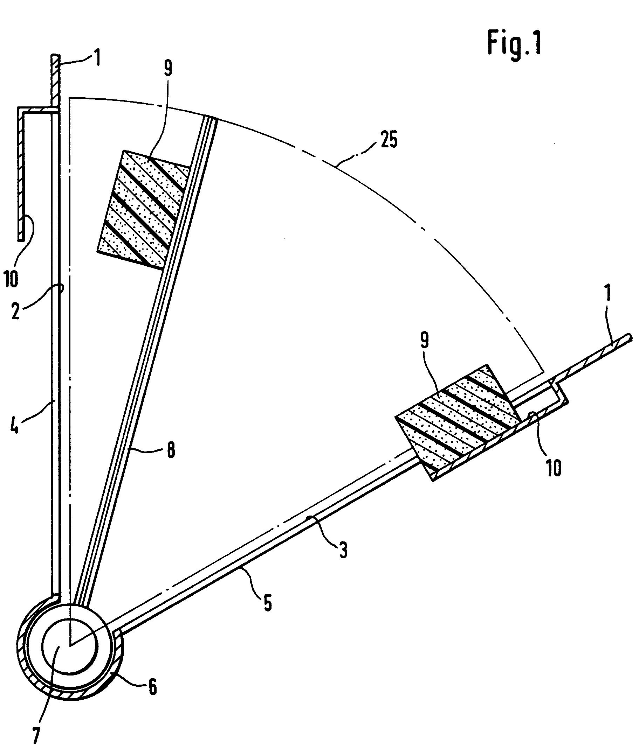

Ein Gehäuse (1) einer Heizungsanlage oder einer Klimaanlage eines Kraftfahrzeugs weist mehrere Luftmischklappen auf, die die Zufuhr von Frisch-, Heiz- oder Umluftströmen in einen Innenraum des Kraftfahrzeugs regeln. Eine solche Luftklappe (8) ist in dem Ausführungsbeispiel nach Figur 1 gezeigt. Diese Luftklappe (8) ist in dem Gehäuse (1) zwischen zwei Endpositionen über einen Schwenkbereich (25) schwenkbeweglich mittels einer Lagerwelle (7) in einer gehäusefesten Lagerung (6) gelagert. In ihren beiden Endpositionen verschließt die Luftklappe (8) alternativ entweder eine Öffnung (4) oder auf der anderen Seite eine Öffnung (5) in dem Gehäuse (1). An die Öffnungen (4 und 5) schließt jeweils ein entsprechender Zuführkanal zur Führung der Luftströmungen in Richtung des Fahrzeuginnenraumes an. Der Rand der Öffnung (4) bildet für die Luftklappe (8) einen Gehäuseanschlag (2), der Rand der Öffnung (5) bildet für die Luftklappe (8) einen Gehäuseanschlag (3). Die Luftklappe (8) ist mittels einer nicht dargestellten mechanischen Betätigungsvorrichtung in die jeweiligen Endpositionen oder in entsprechende Zwischenpositionen verschwenkbar. In den beiden Endpositionen der Luftklappe (8) liegt diese jeweils mit einer Seite dicht an dem Gehäuseanschlag (3) bzw. an dem Gehäuseanschlag (2) der zugehörigen Öffnungen (4 und 5) an. Um einen dichten Sitz der Luftklappe (8) in den beiden Endpositionen zu gewährleisten, ist diese mit nicht dargestellten Dichtkanten und die Ränder der Öffnungen (4, 5) sind mit entsprechenden Dichtflächen versehen.

Durch das mechanische Verstellen der Luftklappe (8, 8a, 8b, 8c) mittels eines von einem Fahrzeuginsassen bedienbaren Stellhebels, würden sich bei allen Ausführungsbeispielen beim Auftreffen der Luftklappe (8, 8a, 8b, 8c) auf einen der beiden Gehäuseanschläge (2, 3) aufgrund der Schwenkgeschwindigkeit der Luftklappe (8) Anschlaggeräusche ergeben. Zudem wäre es möglich, daß die Luftklappe (8, 8a, 8b, 8c) in den Endpositionen im Fahrbetrieb des Kraftfahrzeugs zum Klappern neigt. Die Schwenkgeschwindigkeit der Luftklappe (8) wird in den Teilen des Schwenkbereiches (25), die sich in der Nähe der Gehäuseanschläge (2, 3) befinden, als Anschlaggeschwindigkeit bezeichnet. Zur Verringerung des Anschlaggeräusches ist erfindungsgemäß vorgesehen, die Anschlaggeschwindigkeit durch Bremselemente nicht ruckartig, sondern allmählich zu reduzieren. Da dadurch die Anschlaggeräusche gedämpft, d.h. verringert werden, werden die Bremselemente nachfolgend als Dämpfungselemente bezeichnet.

Der Luftklappe (8) ist eine Dämpfungseinrichtung in Form von zwei elastischen Dämpfungselementen (9), beim Ausführungsbeispiel Schaumstoffblöcken, zugeordnet, die beim Erreichen der beiden Endpositionen wirksam werden und das Auftreffen der Luftklappe (8) auf die beiden Gehäuseanschläge (2 und 3) dämpfen. Beim Ausführungsbeispiel ist dabei ein Dämpfungselement (9) an der einen Seite der Luftklappe (8) direkt fixiert. Das andere Dämpfungselement (9) ist der gegenüberliegenden Seite der Luftklappe (8) dadurch zugeordnet, daß es stationär im Bereich des Gehäuseanschlages (3) angeordnet ist. Als Gegenstück für die Dämpfungselemente (9) ist im Bereich jeder Öffnung (4, 5) des Gehäuses (1) je ein gehausefester Aufprallfortsatz (10) vorgesehen, der jeweils in Strömungsrichtung hinter der jeweiligen Öffnung (3, 4) von einem oberen Rand der jeweiligen Öffnung (3, 4) plattenartig parallel zur jeweiligen Öffnungsfläche in Richtung der gehäusefesten Lagerung (6) nach unten ragt. An dem einen plattenartigen Aufprallfortsatz (10) ist das Dämpfungselement (9) aufgeklebt, das zur Dämpfung der Luftklappe (8) bei einem Auftreffen auf den Gehäuseanschlag (3) dient. Das Dämpfungselement (9) ist mehr als doppelt so dick wie der Abstand des Aufprallfortsatzes (10) zum Gehäuseanschlag (3), so daß es in den Schwenkbereich (25) der Luftklappe (8) hineinragt. Das andere Dämpfungselement (9) ist an der gegenüberliegenden Seite der Luftklappe (8) auf Höhe des Aufprallfortsatzes (10) der Öffnung (4) mit der Luftklappenseite verklebt und ragt in Richtung dieses Aufprallfortsatzes (10) von der Luftklappe (8) ab. Beim Auftreffen auf den Aufprallfortsatz (10) wird das Dämpfungselement (9) elastisch zusammengedrückt und verringert dadurch die Auftreffgeschwindigkeit der Luftklappe (8) auf den Gehäuseanschlag (2) über den Verformungsweg des Dämpfungselementes (9) stetig auf Null. Das Auftreffen der Luftklappe (8) auf den Gehäuseanschlag (2) wird somit so weit gedämpft, daß kein störendes Aufprallgeräusch auftritt. Dabei ergibt sich kein Unterschied in der Dämpfungswirkung bei einer Befestigung des Dämpfungselementes (9) an der Luftklappe (8) oder bei einer Befestigung des Dämpfungselementes (9) an dem Aufprallfortsatz (10). Bei nicht dargestellten Ausführungsbeispielen der Erfindung sind entweder beide Dämpfungselemente auf gleicher Höhe mit der Luftklappe (8) verbunden oder beide Dämpfungselemente (9) sind mit den Aufprallfortsätzen (10) verklebt. Eine Rückfederung der Luftklappe (8) aufgrund des jeweils elastisch verformten Dämpfungselementes wird durch eine nicht dargestellte Endlagenverriegelung verhindert.

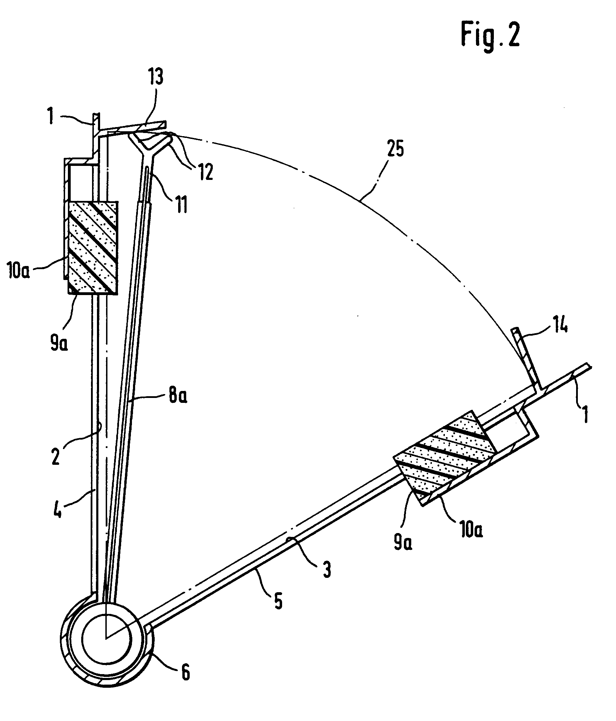

Beim Ausführungsbeispiel nach Figur 2 ist eine Luftmischklappe (8a) entsprechend dem Ausführungsbeispiel nach Figur 1 in dem Gehäuse (1) der Heizungs- oder Klimaanlage schwenkbar gelagert, wobei identische Teile des Klimaanlagengehäuses auch mit identischen Bezugszeichen versehen sind. Die Luftklappe (8a) weist eine Kombination von zwei Arten von Dämpfungselementen auf, die gemeinsam zur Dämpfung der Anschlaggeschwindigkeit der Luftklappe (8a) im Bereich jedes Gehäuseanschlages (2, 3) beitragen. Für die Dämpfungseinrichtung sind zum einen auf Höhe jeder Öffnung (4, 5) im Gehäuse (1) zwei elastische Dämpfungselemente (9a) in Form von Schaumstoffblöcken vorgesehen, die im Bereich der beiden Gehäuseanschläge (2 und 3) jeweils an einem Aufprallfortsatz (10a) befestigt sind. Diese Dämpfungselemente entsprechen im wesentlichen den Dämpfungselementen nach Figur 1, wobei die beiden Dämpfungselemente (9a) jedoch im Vergleich zu den Dämpfungselementen (9) eine geringere Blockdicke aufweisen und daher auch nicht so weit in den Schwenkbereich (25) der Luftklappe (8a) hineinragen wie die Dämpfungselemente (9) bei der Luftklappe (8) nach Figur 1.

Um dennoch bereits in genügend großem Abstand vor dem jeweiligen Gehäuseanschlag (2, 3) die Schwenkgeschwindigkeit der Luftklappe (8a) abbremsen zu können, ist an der Luftklappe (8a) ein weiteres Dämpfungselement in Form einer Dämpfungslippe (11) vorgesehen, die ein Y-förmiges Profil aufweist und in Verlängerung zur Luftklappe (8a) von deren oberen Stirnrand abragt. Die Dämpfungslippe (11) ist aus einem Elastomer hergestellt und daher elastisch verformbar. Durch das Y-förmige Profil der Dämpfungslippe (11) werden zwei elastische Lappen (12) gebildet. Diese wirken mit gehäusefesten Anlaufstegen (13 und 14) zusammen, die gehäusefeste Dichtflächen bilden. Jeder Anlaufsteg (13, 14) ragt auf Höhe jedes Gehäuseanschlages (2, 3) zum Schwenkbereich der Luftklappe (8a) in Form einer schiefen Ebene schräg ab, so daß der der jeweiligen Seite zugehörige Lappen (12) in einem vorderen Bereich des jeweiligen Anlaufsteges (13, 14) zur Anlage kommt und bei der weiteren Verschwenkung der Luftklappe (8a) in spitzem Winkel auf diesen Anlaufsteg (13, 14) aufläuft. Da der Anlaufsteg (13, 14) die Bewegungsbahn des Lappens kreuzt, erhöht sich die Reibungskraft zwischen dem Lappen (12) und dem jeweiligen Anlaufsteg (13, 14) mit dem Schwenkweg der Luftklappe (8a) kontinuierlich. Dadurch wird ein langsames und stetiges Abbremsen der Luftklappe (8a) in dem Schwenkbereich (25) kurz vor Erreichen der jeweiligen Endposition erzielt. Die beiden Dämpfungselemente (9a) tragen zwar auch noch zur Dämpfung der Bewegung der Luftklappe (8a) bei, dienen zusätzlich jedoch als Dämpfungsglied für die am jeweiligen Gehäuseanschlag (2, 3) befindliche Endposition der Luftklappe (8a). Dadurch wird ein Klappern der Luftklappe (8a) in der jeweiligen Endposition verhindert.

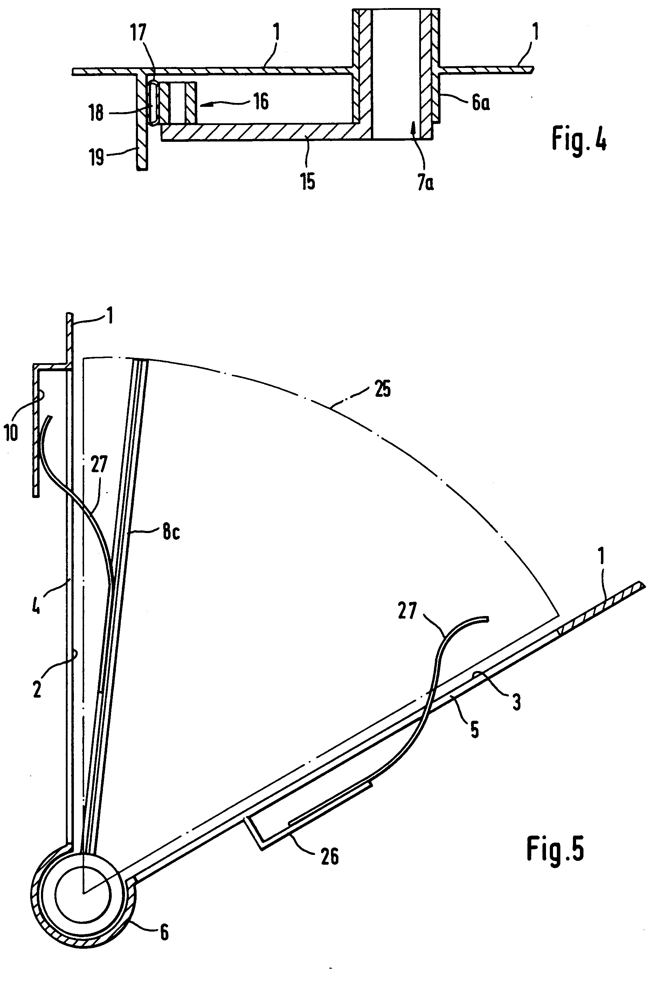

Das Ausführungsbeispiel nach Figur 5 entspricht im wesentlichen dem nach Figur 1. Die bei dieser Luftklappe (8c) dargestellten Dämpfungseinrichtungen weisen als Dämpfungselement jedoch kein Schaumstoffelement, sondern eine S-förmig gekrümmte Blattfeder (27) auf. Eine der beiden Blattfedern (27) ist starr auf einer Seite der Luftklappe (8c) angeordnet und ragt von dieser schräg nach oben und in Richtung der Öffnung (4) im Gehäuse (1) ab. Bei einer Schwenkbewegung der Luftklappe (8c) kommt die Blattfeder (27) vor Erreichen des Gehäuseanschlags (2) an dem Aufprallfortsatz (10) zur Anlage und wird elastisch verbogen. Auch bei dieser Ausführung ist die Luftklappe (8c) in ihren Endpositionen durch eine nicht dargestellte Endlagenverriegelung gesichert, um ein Zurückfedern der Luftklappe (8c) aufgrund der Federkraft der verformten Blattfeder (27) zu verhindern. Auf der gegenüberliegenden Seite der Luftklappe (8c) ist keine Blattfeder direkt an der Luftklappe (8c) vorgesehen. Diese Blattfeder (27) ist hingegen gehäusefest an einer Halteplatte (26) befestigt und ragt S-förmig in den Schwenkbereich (25) der Luftklappe (8c) hinein. Die Wirkung ist die gleiche wie bei dem Schaumstoffblock nach Figur 1.

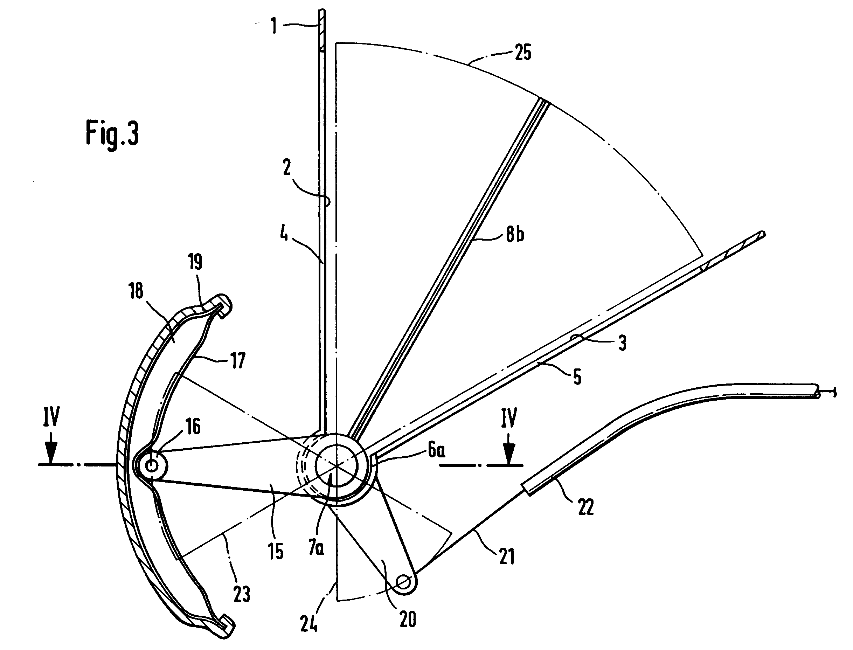

Bei dem Ausführungsbeispiel nach den Figuren 3 und 4 wird die Luftklappe (8b) über ihren gesamten Schwenkbereich (25) zwischen den gegenüberliegenden Gehäuseanschlägen (2 und 3) des Gehäuses der Heizungs- oder Klimaanlage gedämpft. Die Verschwenkung der Luftklappe (8b) erfolgt mit Hilfe eines Bowdenzuges (21), der in einem Bowdenzugrohr (22) verläuft. Das freie Ende des Bowdenzuges (21) ist an einem drehfest mit der Luftklappe (8b) verbundenen Schwenkhebel (20) gelagert. Der Schwenkhebel (20) vollführt einen maximalen Schwenkbereiches (24). Der Schwenkwinkel dieses Schwenkbereiches (24) entspricht dem Schwenkwinkel des Schwenkbereiches (25) der Luftklappe (8b). Von einer Lagerwelle (7a) der Schwenklagerung der Luftklappe (8b) ragt neben dem Schwenkhebel (20) ein Dämpfungshebel (15) ab, wobei der Dämpfungshebel (15) ebenfalls drehfest mit der Luftklappe (8b) ist und in einem stumpfen Winkel zu dem Schwenkhebel (20) abragt. Sein Schwenkbereich (23) entspricht ebenfalls bezüglich des Schwenkwinkels dem Schwenkbereich (25). An seinem freien Ende weist der Dämpfungshebel (15) eine Laufrolle (16) auf, die teilweise in einen nachgiebigen Dämpfungsschlauch (17) eintaucht. Dieser Dämpfungsschlauch (17) ist konzentrisch zur Schwenkachse der Luftklappe (8b) kreisbogenförmig gekrümmt und in einer rinnenartigen, gehäusefesten Halterung (19) eingebettet. Der Dämpfungsschlauch (17) ist mit einem Dämpfungsmedium (18) in Form einer viskosen Dämpfungsflüssigkeit versehen, die eine geschwindigkeitsabhängige Dämpfung der Luftklappe (8b) ermöglicht. Bei einer Verschwenkung der Luftklappe (8b) wird zwangsläufig auch der Dämpfungshebel (15) verschwenkt, dessen freies Stirnende in die Ummantelung des konzentrisch zur Schwenkachse gekrümmten Dämpfungsschlauches (17) eingedrückt ist. Die Verschwenkung des Dämpfungshebels (15) bewirkt eine Verdrängung der Dämpfungsflüssigkeit im Dämpfungsschlauch (17), wobei zwischen der hineingedrückten Laufrolle (16) und der gegenüberliegenden, ein Gehäuseteil bildenden Halterung (19) eine Drosselstelle gebildet wird. Diese ändert ihre Position zusammen mit dem Schwenkweg des Dämpfungshebels (15). Je schneller der Bowdenzug (21) verschoben wird, desto stärker ist die Dämpfung der durch den Dämpfungshebel (15), die Laufrolle (16) und den Dämpfungsschlauch (17) einschließlich des Dämpfungsmediums (18) gebildeten Dämpfungseinrichtung.

## Patentansprüche

1. Luftklappe für eine Heizungs- oder eine Klimaanlage eines Kraftfahrzeugs, die mittels einer mechanischen Betätigungseinrichtung zwischen zwei die Endpositionen der Luftklappe definierenden Gehäuseanschlägen verschwenkbar ist, wobei der Luftklappe (8b) zur Verringerung der Anschlaggeschwindigkeit eine wenigstens im Bereich der beiden Gehäuseanschläge (2, 3) wirksame Dämpfungseinrichtung (15, 16, 17, 18) zugeordnet ist,
**dadurch gekennzeichnet,**
daß die Luftklappe (8b) mit einer über ihren gesamten Bewegungsbereich geschwindigkeitsabhängig wirksamen Dämpfungseinrichtung (15, 16, 17, 18) versehen ist.

2. Luftklappe nach Anspruch 1, dadurch gekennzeichnet, daß an der Luftklappe (8b) drehfest ein Fortsatz (15) vorgesehen ist, der mit einem entsprechend der Bewegungsbahn des Fortsatzes (15) gekrümmten und mit einem Dämpfungsmedium (18) gefüllten Schlauchelement (17) zusammenwirkt, das stationär an einem Gehäuseteil (19) der Heizungs- oder Klimaanlage angeordnet ist.

## Claims

1. An air flap for a heating or air conditioning unit in a motor vehicle which can be pivoted between two housing stops defining the end positions of the air flap by means of a mechanical actuation device whereby, in order to reduce the impact speed the air flap (8b) has a damping device (15, 16, 17, 18) which is effective at least in the area of the two housing stops (2, 3),
**characterised in that**
the air flap (8b) is provided with a damping device (15, 16, 17, 18) which is effective over its entire rage of movement and is speed-dependent.

2. An air flap in accordance with claim 1 characterised in that an extension (15) is provided on the air flap (8b) in such a way that it cannot turn which works together with a hose element (17) which is curved along the path of movement of the continuation (15) and is filled with a damping medium (18) and which is located in a stationary position on part of the housing (19) of the heating or air conditioning unit.

## Revendications

1. Volet de ventilation d'une installation de chauffage ou de climatisation d'un véhicule automobile, qui peut être amené à pivoter au moyen d'un dispositif mécanique d'actionnement entre deux butées formées par l'enveloppe et définissant les positions extrêmes du volet de ventilation, un dispositif d'amortissement (15, 16, 17, 18) qui agit au moins à proximité des deux butées (2, 3) formées par l'enveloppe étant associé au volet de ventilation (8b) pour diminuer la vitesse d'impact,
caractérisé
en ce que le volet de ventilation (8b) est muni d'un dispositif d'amortissement (15, 16, 17, 18) agissant sur la totalité de sa plage de pivotement en fonction de la vitesse.

2. Volet de ventilation selon la revendication 1, caractérisé en ce qu'un prolongement (15) solidarisé en rotation avec le volet de ventilation (8b) est prévu et coopère avec un élément de flexible (17) qui est empli d'un fluide d'amortissement (18), qui est incurvé de manière qui correspond à la voie de déplacement du prolongement (15) et qui est monté en position fixe sur une partie (19) de l'enveloppe de l'installation de chauffage ou de climatisation.
